# NEUE EUROPÄISCHE PATENTSCHRIFT

(11) **EP 3 116 698 B2**
(45) Veröffentlichungstag und Bekanntmachung des Hinweises auf die Entscheidung über den Einspruch: **09.08.2023**
(45) Hinweis auf die Patenterteilung: 14.08.2019
(21) Anmeldenummer: 15718128.0
(22) Anmeldetag: 12.03.2015
(51) Int. Cl.: B29C 45/00

(54) **VERFAHREN ZUR HERSTELLUNG EINES KUNSTSTOFFBAUTEILS MITTELS EINES SPRITZGIESSPROZESSES**
METHOD FOR PRODUCING A PLASTIC COMPONENT BY MEANS OF AN INJECTION MOULDING PROCESS
PROCÉDÉ POUR LA FABRICATION D'UNE PIÈCE EN MATÉRIAU SYNTHÉTIQUE AU MOYEN D'UN PROCÉDÉ DE MOULAGE PAR INJECTION

(30) Priorität: 14.03.2014 DE 102014103501
(43) Veröffentlichungstag der Anmeldung: 18.01.2017
(73) Patentinhaber: EuWe Eugen Wexler Holding GmbH & Co. KG, 91207 Lauf a. d. Pegnitz (DE)
(72) Erfinder: LIEBAU, Burkhard, 90453 Nürnberg (DE)
(74) Vertreter: Hafner & Kohl PartmbB
(86) Internationale Anmeldenummer: PCT/DE2015/000112
(87) Internationale Veröffentlichungsnummer: WO 2015/135522

(56) Entgegenhaltungen:
- EP-A1- 0 904 994
- EP-A1- 1 555 107
- US-A1- 2002 079 676
- US-A1- 2013 026 677

## Beschreibung

Die Erfindung betrifft ein Verfahren zur Herstellung eines Kunststoffbauteils in Form eines Verkleidungselements zur Verkleidung eines mit wenigstens einem Überrollschutzbügel ausgestatteten Teils einer Fahrzeugkarosserie mittels eines Spritzgießprozesses, welches Kunststoffbauteil einen Grundkörper umfasst, welcher wenigstens einen als Sollbruchbereich ausgebildeten Bauteilabschnitt mit einer im Vergleich zu den übrigen Abschnitten des Grundkörpers geringeren Wandstärke umfasst.

Es kann notwendig sein, Kunststoffbauteile mit mit unterschiedlichen Wandstärken aufweisenden Bauteilabschnitten auszubilden. Die unterschiedliche Wandstärke aufweisenden Bauteilabschnitte können unterschiedlich funktionalisiert sein. So ist es beispielsweise denkbar, dass besonders geringe Wandstärken aufweisende Bauteilabschnitte als Sollbruchbereiche dienen, welche bei Einwirkung vergleichsweise geringer Kräfte aufbrechen.

Es ist bekannt, dass die Herstellung von entsprechenden Kunststoffbauteilen mit unterschiedliche Wandstärken aufweisenden Bauteilabschnitten mittels Spritzgießprozessen eine Herausforderung darstellen kann. Dies begründet sich insbesondere dadurch, dass die Ausbildung von Bauteilabschnitten mit besonders geringen Wandstärken, d. h. insbesondere Wandstärken unterhalb 0,5 mm, im Hinblick auf die Formfüllung einer spritzgießwerkzeugseitigen Werkzeugkavität problematisch ist.

EP 1 555 107 A1 offenbart eine Vorrichtung zur Herstellung eines Kunststoffbauteils in Form einer Airbag-Abdeckung als Teil einer Instrumententafel.

US 2002/079676 A1 offenbart ebenso eine Vorrichtung zur Herstellung eines Kunststoffbauteils in Form einer Airbag-Abdeckung als Teil einer Instrumententafel.

EP 0 904 994 A1 offenbart ein Verfahren zur Herstellung eines Kunststoffbauteils in Form einer Airbag-Abdeckung als Teil einer Instrumententafel.

Der Erfindung liegt damit die Aufgabe zugrunde, ein verbessertes Verfahren zur Herstellung eines Kunststoffbauteils in Form eines Verkleidungselements zur Verkleidung eines mit wenigstens einem Überrollschutzbügel ausgestatteten Teils einer Fahrzeugkarosserie, welches Kunststoffbauteil einen Grundkörper umfasst, welcher wenigstens einen als Sollbruchbereich ausgebildeten Bauteilabschnitt mit einer im Vergleich zu den übrigen Abschnitten des Grundkörpers geringeren Wandstärke umfasst, anzugeben.

Die Aufgabe wird durch ein Verfahren gemäß Anspruch 1gelöst.

Das herzustellende bzw. hergestellte Kunststoffbauteil umfasst einen Grundkörper. Der Grundkörper definiert im Wesentlichen die äußeren Abmessungen sowie die räumliche Gestalt, d. h. insbesondere die Form, des Kunststoffbauteils.

Der Grundkörper umfasst wenigstens einen an dem fertigen Bauteil als Sollbruchbereich ausgebildeten bzw. dienenden Bauteilabschnitt. Der oder ein als Sollbruchbereich ausgebildeter Bauteilabschnitt weist eine im Vergleich zu den übrigen Abschnitten des Grundkörpers geringere Wandstärke auf und lässt sich derart von diesen unterscheiden. Typischerweise ist der als Sollbruchbereich ausgebildete Bauteilabschnitt der die geringste Wandstärke aufweisende Abschnitt des Grundkörpers bzw. des Kunststoffbauteils.

Unter einem Sollbruchbereich ist ein Konstruktionselement zu verstehen, welches, insbesondere aufgrund seiner konstruktiven Auslegung, d. h. insbesondere seiner vergleichsweise geringen Wandstärke, in einer besonderen Lastsituation, d. h. bei Einwirkung bestimmter Kräfte, gewollt und gezielt versagten bzw. bricht. Der oder ein als Sollbruchbereich ausgebildeter Bauteilabschnitt ist sonach aufgrund der vergleichsweise geringen Wandstärke strukturell geschwächt und bricht bereits bei Aufbringung bzw. Einwirkung vergleichsweise geringer Kräfte. Über die Festlegung der Wandstärke des als Sollbruchbereich ausgebildeten Bauteilabschnitts und die mechanischen Eigenschaften des das Kunststoffbauteil bildenden Kunststoffmaterials sowie gegebenenfalls spritzgießprozessspezifische Parameter, wie z. B. Abkühlraten etc., lässt sich gezielt Einfluss auf die für ein Versagen bzw. einen Bruch eines entsprechenden Bauteilabschnitts erforderlichen Kräfte nehmen.

Selbstverständlich kann der Grundkörper zudem andere bzw. weitere funktionalisierte Bauteilabschnitte, z. B. in Form von Befestigungselementen, über welche eine Befestigung des Kunststoffbauteils an einem Drittgegenstand möglich ist, oder in Form von Versteifungselementen, über welche eine Erhöhung der mechanischen Stabilität, d. h. insbesondere der Steifigkeit, des Kunststoffbauteils möglich ist, aufweisen.

In einem ersten Schritt des erfindungsgemäßen Verfahrens erfolgt ein Einspritzen einer plastifizierten Kunststoffmasse, d. h. einer Kunststoffschmelze, in eine Werkzeugkavität eines Spritzgießwerkzeugs zur Ausbildung des Grundkörpers, wobei die Werkzeugkavität so dimensioniert ist, dass die grundkörperseitigen Bereiche, in welchem entsprechende als Sollbruchbereiche ausgebildete bzw. dienende Bauteilabschnitte auszubilden sind, jeweils mit einem bestimmten Wandstärkenübermaß ausgebildet werden.

Das im Rahmen des erfindungsgemäßen Verfahrens verwendete Spritzgießwerkzeug weist sonach eine Werkzeugkavität auf, die die Endabmessungen des herzustellenden Kunststoffbauteils nicht exakt bzw. vollständig abbildet. In den werkzeugkavitätsseitigen Bereichen, in welchen entsprechende als Sollbruchstelle dienende Bauteilabschnitte auszubilden sind, weist die Werkzeugkavität ein Übermaß im Hinblick auf die Sollwandstärke dieser Bauteilabschnitte am fertigen Bauteil auf. Entsprechend weist der in dem ersten Schritt des erfindungsgemäßen Verfahrens ausgebildete Grundkörper in den Bereichen, in welchen im Weiteren die als Sollbruchbereiche dienenden Bauteilabschnitte ausgebildet werden, nach Füllung der Werkzeugkavität ein temporär vorhandenes Wandstärkenübermaß auf. Unter einem Wandstärkenübermaß ist insbesondere zu verstehen, dass die Wandstärke in diesem Bereich oberhalb der vorgesehenen Sollwandstärke der als Sollbruchbereiche dienenden Bauteilabschnitte liegt.

Die Füllung der Werkzeugkavität im Rahmen des Einspritzens der plastifizierten Kunststoffmasse ist derart im Rahmen des erfindungsgemäßen Verfahrens ohne weiteres möglich, da diese prozesstechnisch von der Ausbildung entsprechender Bauteilabschnitte mit besonders geringen Wandstärken, d. h. typischerweise Wandstärken unterhalb 0,5 mm, entkoppelt ist.

Die verwendete Werkzeugkavität kann so dimensioniert sein, dass die grundkörperseitigen Bereiche, in welchen jeweilige als Sollbruchbereich dienende Bauteilabschnitte auszubilden sind, mit einem Wandstärkenübermaß ausgebildet werden, wobei das Wandstärkenübermaß der grundkörperseitigen Bereiche, in welchen die als Sollbruchbereich dienenden Bauteilabschnitte auszubilden sind, unterhalb der Wandstärke der übrigen Abschnitte des Grundkörpers liegt. Das Wandstärkenübermaß liegt absolut betrachtet sonach typischerweise zwischen der Wandstärke der übrigen Abschnitte des Grundkörpers und der Sollwandstärke jeweiliger als Sollbruchbereiche dienender Bauteilabschnitte am fertigen Bauteil.

In einem zweiten Schritt des erfindungsgemäßen Verfahrens erfolgt ein Bewegen wenigstens eines spritzgießwerkzeugseitigen Schiebeelements gegen den grundkörperseitigen Bereich, in welchem der Bauteilabschnitt auszubilden ist, zur Ausbildung des Bauteilabschnitts derart, dass die Wandstärke auf die im Vergleich zu den übrigen Abschnitten des Grundkörpers geringere Wandstärke reduziert wird. In dem zweiten Schritt des erfindungsgemäßen Verfahrens werden sonach die als Sollbruchbereiche dienenden Bauteilabschnitte ausgebildet.

Hierfür sind spritzgießwerkzeugseitig entsprechende Schiebeelemente, d. h. insbesondere Schiebestempel, vorgesehen, welche sich über geeignete spritzgießwerkzeugseitige Antriebseinrichtungen, von einer Ausgangsstellung in eine Endstellung bewegen lassen. In der Ausgangsstellung sind die Schiebeelemente typischerweise eingefahren und ragen nicht oder im Vergleich zu der Endstellung nur geringfügig von einer die Werkzeugkavität begrenzenden Oberfläche des Spritzgießwerkzeugs respektive einer diesem zugehörigen Werkzeugformhälfte ab. Entsprechend sind die Schiebeelemente in der Endstellung typischerweise ausgefahren und ragen zumindest abschnittsweise von einer die Werkzeugkavität begrenzenden Oberfläche des Spritzgießwerkzeugs respektive einer diesem zugehörigen Werkzeugformhälfte ab. In der Endstellung ragen die Schiebeelemente sonach im Allgemeinen weiter von einer die Werkzeugkavität begrenzenden Oberfläche des Spritzgießwerkzeugs respektive einer diesem zugehörigen Werkzeugformhälfte ab.

Durch die definiert gesteuerte, auch als Hub zu bezeichnende bzw. zu erachtende Bewegung entsprechender Schiebeelemente gegen den selbstverständlich noch plastischen und somit verformbaren Grundkörper wird plastifiziertes Kunststoffmaterial aus den grundkörperseitigen Bereichen, in welchen die als Sollbruchbereiche dienenden Bauteilabschnitte ausgebildet werden, verdrängt. Es zeigte sich, dass dies nicht dazu führt, dass plastifiziertes Kunststoffmaterial aus der Werkzeugkavität gedrängt wird. Vielmehr kommt es durch die Verdrängung von Kunststoffmaterial aus den Bereichen, in welchen die als Sollbruchbereiche dienenden Bauteilabschnitte ausgebildet werden, zu einer Materialverdichtung in den übrigen Abschnitten des Grundkörpers, welche jedoch im Hinblick auf die Eigenschaften des fertigen Kunststoffbauteils nicht nachteilig ist. Insbesondere beeinträchtigt diese die optische Anmutung des fertigen Kunststoffbauteils nicht.

In einem letzten Schritt des erfindungsgemäßen Verfahrens erfolgt ein Abkühlen des Kunststoffmaterials und schließlich ein Entfernen des fertigen Kunststoffbauteils aus der Werkzeugkavität respektive dem Spritzgießwerkzeug. Zum Entfernen des fertigen Kunststoffbauteils aus der Werkzeugkavität respektive dem Spritzgießwerkzeug können beispielsweise geeignete Greifervorrichtungen, Roboter etc. eingesetzt werden.

Das erfindungsgemäße Verfahren stellt ein zuverlässiges, vergleichsweise einfach realisierbares und somit verbessertes Prinzip zur Herstellung eines Kunststoffbauteils mit unterschiedliche Wandstärken aufweisenden Bauteilabschnitten dar. Insbesondere lasse sich mit dem erfindungsgemäßen Verfahren Bauteilabschnitte mit vergleichsweise geringen Wandstärken, d. h. insbesondere Wandstärken unterhalb 0,5 mm, problemlos herstellen.

Die Bewegung der Schiebeelemente gegen den Grundkörper erfolgt zweckmäßig mit Beginn und/oder während der Nachdruckphase des Spritzgießprozesses. Derart ist es möglich, die Zykluszeit des Spritzgießprozesses nicht unnötig zu verlängern.

Das gegen den Grundkörper bewegte freie Ende des, der oder bestimmter spritzgießwerkzeugseitiger Schiebeelemente ist zweckmäßig mit einer Schrägfläche versehen. Die Schrägfläche ist typischerweise durch eine Abkantung des freien Endes eines entsprechenden Schiebeelements gebildet. Die Schrägfläche bedingt eine entsprechende Abschrägung des Kunststoffbauteils in den als Sollbruchstelle dienenden Bauteilabschnitten oder entsprechenden Übergangsbereichen in entsprechende als Sollbruchstelle dienende Bauteilabschnitte. Die Abschrägung des Kunststoffbauteils stellt funktional und konstruktiv eine Kerbe dar, welche bei Einwirkung von Kräften eine Kerbwirkung bewirkt bzw. verstärkt und so die Brucheigenschaften der als Sollbruchbereiche dienenden Bauteilabschnitte begünstigt.

Neben dem als Sollbruchbereich ausgebildeten bzw. dienenden Bauteilabschnitt wird wenigstens ein als Filmscharnier ausgebildeter bzw. dienender weiterer Bauteilabschnitt ausgebildet, wobei die Wandstärke des als Filmscharnier ausgebildeten weiteren Bauteilabschnitts zwischen der Wandstärke des als Sollbruchbereich ausgebildeten Bauteilabschnitts und der Wandstärke der übrigen Abschnitte des Grundkörpers liegt. Entsprechende als Filmscharnier ausgebildete bzw. dienende Bauteilabschnitte werden typischerweise in dem ersten Schritt des erfindungsgemäßen Verfahrens und somit gemeinsam mit dem Grundkörper ausgebildet. Die Wandstärke entsprechender als Filmscharnier dienender Bauteilabschnitte ist derart gewählt, dass diese keine Probleme im Hinblick auf eine vollständige Füllung der Werkzeugkavität im ersten Schritt des erfindungsgemäßen Verfahrens bereitet.

Der als Sollbruchbereich ausgebildete Bauteilabschnitt und der als Filmscharnier ausgebildete Bauteilabschnitt begrenzen gemeinsam einen grundkörperseitigen Klappenbereich. Der Klappenbereich dient funktionell dazu, zu verhindern, dass im Fall eines Aufbrechens der Sollbruchbereiche Bruchstücke des Grundkörpers unkontrollierbar von dem Grundkörper abspringen. Vielmehr kommt es in diesem Fall zu einem Aufklappen bzw. Aufschwenken des Klappenbereichs um eine durch den als Filmscharnier dienenden Bauteilabschnitt definierte Klapp- bzw. Schwenkachse.

Der oder ein als Sollbruchbereich ausgebildeter Bauteilabschnitt kann z. B. U-förmig ausgebildet werden. Die U-Form entsprechender als Sollbruchbereich dienender Bauteilabschnitte ist insbesondere im Hinblick auf die vorstehend beschriebene Begrenzung eines Klappenbereichs zweckmäßig. Der Klappenbereich kann sonach (im Wesentlichen) rechteckig bzw. mit einer (im Wesentlichen) rechteckigen Grundform ausgebildet werden. Selbstverständlich ist die Form entsprechender Bauteilabschnitte grundsätzlich im Hinblick auf konkrete funktionelle wie auch konstruktive Vorgaben des Kunststoffbauteils festzulegen.

Erfindungsgemäß sind bzw. werden folgende Wandstärken bzw. Wandstärkenbereiche vorgesehen: der als Sollbruchbereich ausgebildete Bauteilabschnitt ist bzw. wird mit einer in einem Bereich zwischen 0,1 und 0,4 mm liegenden Wandstärke und die übrigen Abschnitte des Grundkörpers, abgesehen von dem vorhandenen als Filmscharnier ausgebildeten Bauteilabschnitt, mit einer in einem Bereich zwischen 1 und 3 mm, insbesondere bei 2,5 mm, liegenden Wandstärke ausgebildet. Der als Filmscharnier ausgebildete Bauteilabschnitt wird mit einer in einem Bereich zwischen 0,6 und 0,9 mm, insbesondere bei 0,8 mm, liegenden Wandstärke ausgebildet.

Als plastifizierte Kunststoffmasse wird typischerweise wenigstens ein thermoplastisches Kunststoffmaterial bzw. Polymer verwendet. Hierzu zählen insbesondere polyolefinische oder aliphatische Kunststoffmaterialien. Bevorzugt ist die Verwendung von technischen Kunststoffmaterialien wie, z. B. ABS und/oder PC. Die Kunststoffmaterialien können bestimmte Füllstoffe, wie z. B. Verstärkungsfasern, enthalten. Selbstverständlich können Gemische chemisch unterschiedlicher Kunststoffmaterialien, so genannte Blends, verwendet werden.

Bei dem gemäß dem erfindungsgemäßen Verfahren hergestellten Kunststoffbauteil handelt es sich um ein Verkleidungselement zur Verkleidung eines mit wenigstens einem Überrollschutzbügel ausgestatteten Teils einer Fahrzeugkarosserie. Ein solches Verkleidungselement kann z. B. ein Querträger sein, welcher im Bereich des Fonds eines Kraftfahrzeugs, insbesondere eines Cabriolets, quer zur Fahrzeuglängsachse zu verbauen ist. Die als Sollbruchbereiche dienenden Bauteilabschnitte sind im verbauten Zustand des Kunststoffbauteils derart relativ zu fahrzeugkarosserieseitigen Überrollschutzbügeln angeordnet, dass Letztere im Fall einer Kollision des Kraftfahrzeugs derart gegen das Verkleidungselement bewegt werden, dass die Sollbruchbereiche brechen.

Die Erfindung betrifft auch ein Kunststoffbauteil, welches gemäß dem vorstehend beschriebenen erfindungsgemäßen Verfahren hergestellt ist. Bezüglich des erfindungsgemäßen Kunststoffbauteils gelten sämtliche Ausführungen bezüglich des erfindungsgemäßen Verfahrens analog.

Bei dem erfindungsgemäßen Kunststoffbauteil handelt es sich sonach um ein Verkleidungselement zur Verkleidung eines mit wenigstens einem Überrollschutzbügel ausgestatteten Teils einer Fahrzeugkarosserie.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig.1: ein Kunststoffbauteil gemäß einem Ausführungsbeispiel der Erfindung;
- Fig. 2: eine vergrößerte Ansicht der in Fig. 1 gezeigten Einzelheit II;
- Fig. 3-6: verschiedene Schritte im Rahmen der Durchführung eines Verfahrens zur Herstellung eines Kunststoffbauteils gemäß einem Ausführungsbeispiel der Erfindung; und
- Fig. 7: eine Prinzipdarstellung eines Schiebeelements eines im Rahmen eines Verfahrens zur Herstellung eines Kunststoffbauteils gemäß einem Ausführungsbeispiel der Erfindung verwendeten Spritzgießwerkzeugs.

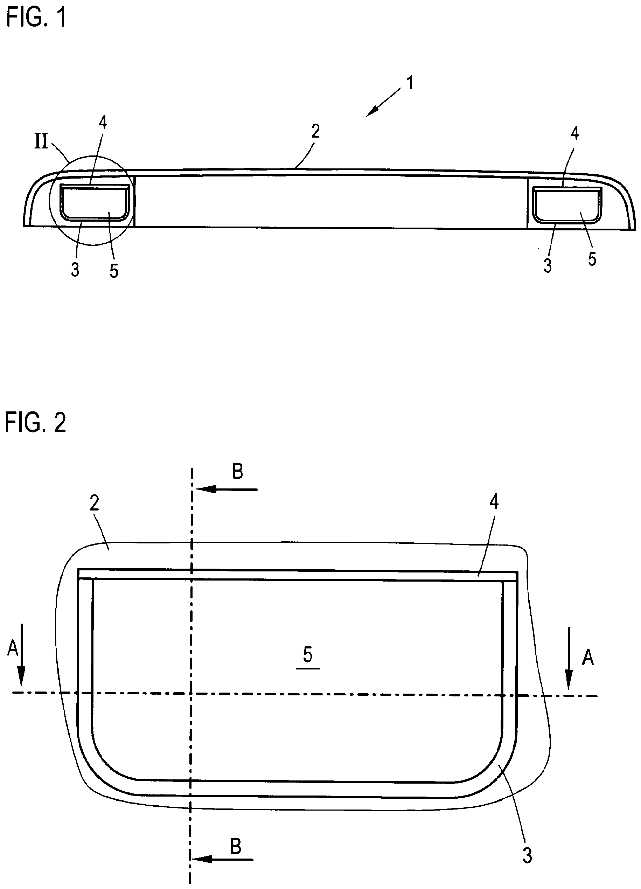

Fig. 1 zeigt ein Kunststoffbauteil 1 gemäß einem Ausführungsbeispiel der Erfindung. Fig. 1 zeigt dabei eine Ansicht der Nichtsichtseite bzw. Rückseite des Kunststoffbauteils 1. Die Sichtseite des Kunststoffbauteils 1 kann zumindest abschnittsweise mit wenigstens einem Dekorelement, wie z. B. einer Folie, kaschiert sein.

Bei dem Kunststoffbauteil 1 handelt es sich um ein Verkleidungselement zur Verkleidung eines mit wenigstens einem Überrollschutzbügel ausgestatteten Teils einer Fahrzeugkarosserie. Ein solches Verkleidungselement kann z. B. ein Querträger sein, welcher im Bereich des Fonds eines Kraftfahrzeugs, insbesondere eines Cabriolets, quer zur Fahrzeuglängsachse zu verbauen ist.

Das Kunststoffbauteil 1 umfasst einen Grundkörper 2. Über den Grundkörper 2 sind die Außenabmessungen und die geometrische Gestalt des Kunststoffbauteils 1 definiert. An dem Grundkörper 2 sind verschiedene funktionelle Bauteilabschnitte ausgebildet bzw. angeformt. Hierzu zählen beispielsweise nicht näher bezeichnete Befestigungselemente zur Befestigung des Kunststoffbauteils 1 an einem Drittgegenstand, wie der vorstehend genannten Fahrzeugkarosserie, und ebenso nicht näher bezeichnete Versteifungselemente zur Erhöhung der mechanischen Stabilität, d. h. insbesondere der Steifigkeit, des Kunststoffbauteils 1.

Hervorzuheben, weil für die Erläuterung des erfindungsgemäßen Prinzips von Bedeutung, sind einerseits grundkörperseitige als Sollbruchstelle ausgebildete bzw. dienende Bauteilabschnitte 3 und andererseits grundkörperseitige als Filmscharnier ausgebildete bzw. dienende Bauteilabschnitte 4. Die als Sollbruchstelle dienenden Bauteilabschnitte 3 erstrecken sich sowohl in Richtung der Längs- als auch in Richtung der Querachse des Kunststoffbauteils 1 und bilden somit die Form eines "U". Die als Sollbruchstelle dienenden Bauteilabschnitte 3 sind sonach U-förmig ausgebildet.

Die genannten Bauteilabschnitte 3, 4 unterscheiden sich insbesondere in ihren Wandstärken von den übrigen Abschnitten des Grundkörpers 2. Dabei weisen die als Sollbruchstelle ausgebildeten Bauteilabschnitte 3 die geringste Wandstärke auf. Die Wandstärke der als Sollbruchstelle ausgebildeten Bauteilabschnitte 3 liegt bei ca. 0,4 mm. Die als Filmscharnier ausgebildeten Bauteilabschnitte 4 weisen hierzu eine im Vergleich höhere Wandstärke auf. Die Wandstärke der als Filmscharnier ausgebildeten Bauteilabschnitte 4 liegt bei ca. 0,8 mm. Die übrigen Abschnitte des Grundkörpers 2 weisen eine Wandstärke von ca. 2,5 mm auf. Der Grundkörper 2 weist sonach unterschiedliche Abschnitte bzw. Bauteilabschnitte mit unterschiedlichen Wandstärken auf.

Ersichtlich begrenzen jeweilige als Sollbruchstelle dienende Bauteilabschnitte 3 gemeinsam mit jeweiligen als Filmscharnier dienenden Bauteilabschnitten 4 jeweilige grundkörperseitige Klappenbereiche 5. Aufgabe und Funktion der Klappenbereiche 5 bestehen darin, zu verhindern, dass im Fall eines Aufbrechens der Sollbruchbereiche Bruchstücke des Grundkörpers 2 unkontrollierbar von dem Grundkörper 2 abspringen. Vielmehr kommt es in diesem Fall zu einem Aufklappen bzw. Aufschwenken des Klappenbereichs 5 um jeweilige durch die als Filmscharnier dienenden Bauteilabschnitte 4 definierte Klapp- bzw. Schwenkachsen.

Im verbauten Zustand des Kunststoffbauteils 1, in welchem das Kunststoffbauteil 1 ordnungsgemäß an einer Fahrzeugkarosserie angebunden ist, sind die Klappenbereiche 5 oberhalb jeweiliger fahrzeugkarosserieseitig vorgesehener Überrollschutzbügel angeordnet. Mithin sind die als Sollbruchbereiche dienenden Bauteilabschnitte 3 im verbauten Zustand des Kunststoffbauteils 1 derart relativ zu fahrzeugkarosserieseitigen Überrollschutzbügeln angeordnet, dass Letztere im Fall einer Kollision des Kraftfahrzeugs derart gegen das Kunststoffbauteil 1, d. h. insbesondere die Klappenbereiche 5, bewegt werden, dass die Sollbruchbereiche brechen.

Im Fall einer Kollision des Kraftfahrzeugs werden die Überrollschutzbügel durch geeignete Einrichtungen, z. B. pyrotechnisch, aktiviert bzw. gezündet und binnen Bruchteilen von Sekunden gegen die Klappenbereiche 5 beschleunigt. Die Beschleunigung der Überrollschutzbügel gegen die Klappenbereiche 5 bewirkt, wie erwähnt, ein Aufbrechen der als Sollbruchstelle dienenden Bauteilabschnitte 3, nicht jedoch der übrigen Abschnitte des Grundkörpers 2, d. h. insbesondere nicht der als Filmscharnier dienenden Bauteilabschnitte 4. Die Klappenbereiche 5 klappen bzw. schwenken um die Klapp- bzw. Schwenkachse auf und geben den Weg für die Überrollschutzbügel durch das Kunststoffbauteil 1 frei.

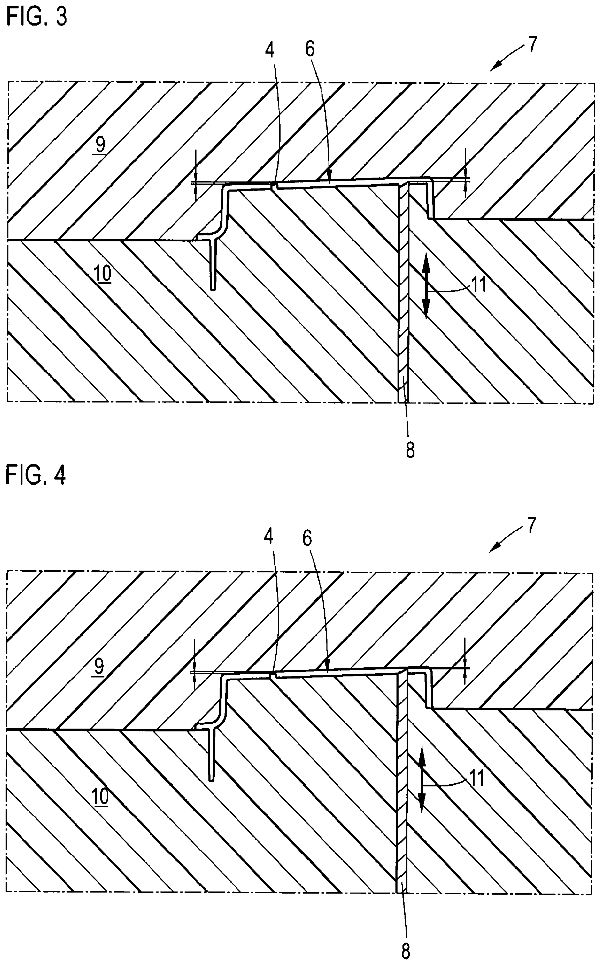

Fig. 2 zeigt eine vergrößerte Ansicht der in Fig. 1 gezeigten Einzelheit II. Anhand von Fig. 2 lässt sich die im Wesentlichen rechteckige Grundform eines durch einen als Sollbruchbereich dienenden Bauteilabschnitt 3 und einen als Filmscharnier dienenden Bauteilabschnitt 4 begrenzten Klappenbereichs 5 deutlich erkennen. In Fig. 2 sind Schnittlinien A - A in Richtung der Längsachse und Schnittlinien B - B in Richtung der Querachse des Kunststoffbauteils 1 eingezeichnet, welche insbesondere für die Erläuterung der Fig. 3-6 von Bedeutung sind.

Das Verfahren zur Herstellung des oder eines wie beschriebenen Kunststoffbauteils 1 wird mit Bezug auf die Fig. 3 - 7 näher erläutert und umfasst die folgenden Schritte:
- Einspritzen einer plastifizierten Kunststoffmasse in eine Werkzeugkavität 6 eines Spritzgießwerkzeugs 7 zur Ausbildung des Grundkörpers 2, wobei die Werkzeugkavität 6 so dimensioniert ist, dass die grundkörperseitigen Bereiche, in welchem die als Sollbruchbereich dienenden Bauteilabschnitte 3 auszubilden sind, mit einem Wandstärkenübermaß ausgebildet wird,
- Bewegen wenigstens eines spritzgießwerkzeugseitigen Schiebeelements 8 gegen den grundkörperseitigen Bereich, in welchem die als Sollbruchbereiche dienenden Bauteilabschnitte 3 auszubilden sind, zur Ausbildung der als Sollbruchbereiche 4 dienenden Bauteilabschnitte derart, dass deren Wandstärke auf die im Vergleich zu den übrigen Abschnitten des Grundkörpers 2 geringere Wandstärke reduziert wird,
- Abkühlen und Entfernen des Kunststoffbauteils 1 aus der Werkzeugkavität 6 respektive dem Spritzgießwerkzeug 7.

Das Verfahren wird sonach mit einer ein Spritzgießwerkzeug aufweisenden Spritzgießmaschine durchgeführt.

Bei der plastifizierten Kunststoffmasse, welche selbstverständlich auch als Kunststoffschmelze bezeichnet werden kann, handelt es sich beispielsweise um ein plastifiziertes ABS/PC-Blend, d. h. eine Mischung aus den zwei chemisch unterschiedlichen Kunststoffmaterialien ABS und PC. Die Temperatur der plastifizierten Kunststoffmasse liegt in diesem beispielhaften Fall bei ca. 285°C. Weitere Parameter, wie z. B. der Einspritzdruck, sind, wie dem einschlägigen Fachmann bekannt, insbesondere im Hinblick auf konkrete Abmessungen des herzustellenden Kunststoffbauteils 1 festzulegen.

Die Fig. 3-6 zeigen verschiedene Schritte im Rahmen der Durchführung eines Verfahrens zur Herstellung eines Kunststoffbauteils 1 gemäß einem Ausführungsbeispiel der Erfindung.

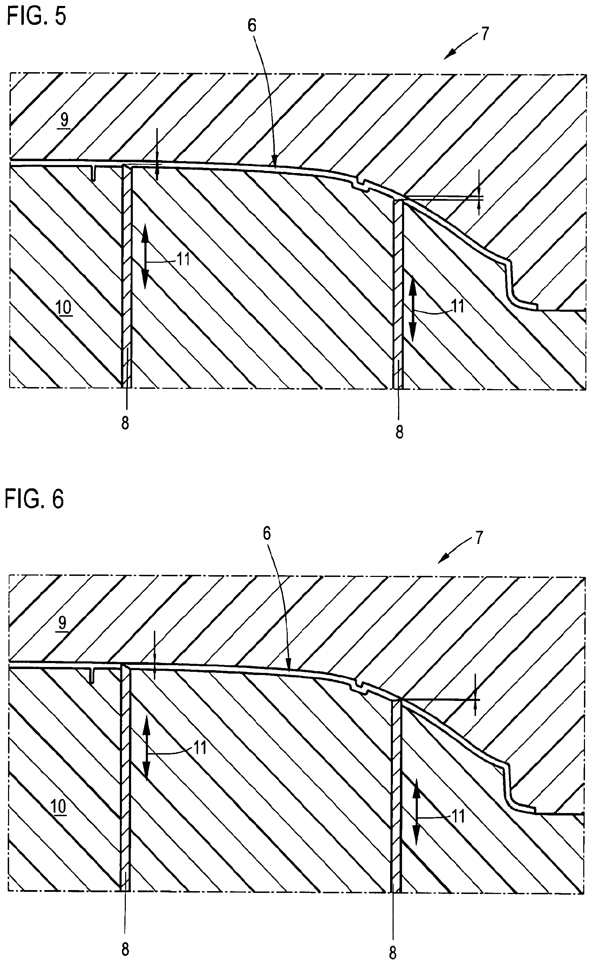

Bei den Fig. 3-6 handelt es sich jeweils um Schnittansichten. Die Fig. 3, 4 stellen eine Schnittansicht entsprechend den in Fig. 2 gezeigten Schnittlinien B - B und somit einen Querschnitt, die Fig. 5, 6 stellen eine Schnittansicht entsprechend den in Fig. 2 gezeigten Schnittlinien A - A und somit einen Längsschnitt dar.

Die Fig. 3, 5 zeigen jeweils die Spritzstellung des Spritzgießwerkzeugs 7, in welcher die plastifizierte Kunststoffmasse in die Werkzeugkavität eingespritzt wird bzw. ist. Die Fig. 3, 5 bilden sonach den Einspritzvorgang ab. Die Fig. 4, 6 zeigen jeweils die Auswerfstellung, in welcher das fertige Kunststoffbauteil 1 aus der Werkzeugkavität 6 respektive dem Spritzgießwerkzeug 7 entfernt werden kann.

Ersichtlich weist das Spritzgießwerkzeug 7 zwei Werkzeugformhälften 9, 10 auf. Die Werkzeugformhälfte 9 ist düsenseitig, die Werkzeugformhälfte 10 ist auswerferseitig angeordnet. Während des Einspritzvorgangs sowie einer zeitlich nachfolgenden Nachdruck- und gegebenenfalls Abkühlphase liegen die beiden Werkzeugformhälften 9, 10 mit gegenüber liegenden Flächen unmittelbar aneinander an, die Werkzeugkavität 6 ist sonach geschlossen.

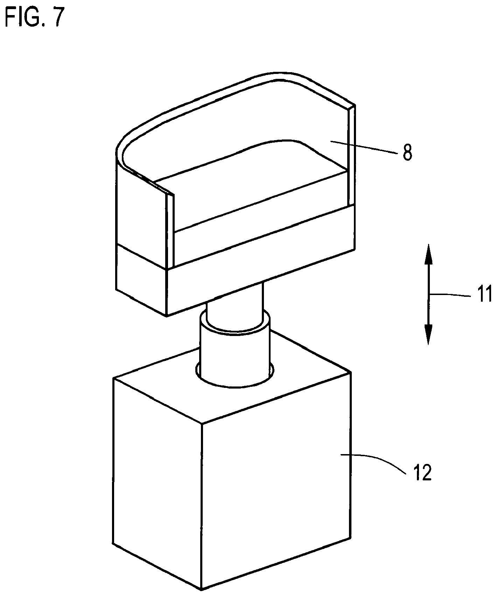

Das spritzgießwerkzeugseitige Schiebeelement 8, welches, wie sich aus Fig. 7 ergibt, entsprechend dem Verlauf der als Sollbruchbereiche dienenden Bauteilabschnitte 3 am fertigen Kunststoffbauteil 1 U-förmig ausgebildet ist, ist im Bereich der auswerferseitigen Werkzeugformhälfte 10 angeordnet. Die bewegliche Lagerung des Schiebeelements 8 ist durch den exemplarisch gezeigten Doppelpfeil 11 angedeutet.

Das Schiebeelement 8 ist mit einer geeigneten, d. h. z. B. hydraulisch gesteuerten, spritzgießwerkzeugseitigen Antriebseinrichtung 12 (vgl. Fig. 7) gekoppelt, über welche das Schiebeelement 8 von der in den Fig. 3, 5 gezeigten zurückgefahrenen Stellung, kurz Ausgangstellung, definiert in die in den Fig. 4, 6 gezeigte ausgefahrene Stellung, kurz Endstellung, bewegbar, und umgekehrt, ist. In der Ausgangsstellung ist das Schiebeelement 8 zurückgefahren und ragt im Vergleich zu der Endstellung nur geringfügig von einer die Werkzeugkavität 6 begrenzenden Oberfläche der Werkzeugformhälfte 10 ab. Entsprechend ragt das Schiebeelement 8 in der Endstellung im Vergleich zu der Ausgangsstellung weiter von der die Werkzeugkavität 6 begrenzenden Oberfläche der Werkzeugformhälfte 10 ab.

Ersichtlich ist das Schiebeelement 8, welches auch als Schiebestempel bezeichnet bzw. erachtet werden kann, im Bereich seines freien Endes abgekantet, d. h. mit einer Schrägfläche versehen. Die Schrägfläche bedingt eine entsprechende Abschrägung des Kunststoffbauteils 1 in den als Sollbruchstelle dienenden Bauteilabschnitten 3 bzw. entsprechenden Übergangsbereichen in entsprechende Bauteilabschnitte 3. Diese abschnittsweise Abschrägung des Kunststoffbauteils 1 stellt funktional und konstruktiv eine Kerbe dar, welche bei Einwirkung von Kräften eine Kerbwirkung bewirkt bzw. verstärkt und so die Brucheigenschaften der als Sollbruchbereiche ausgebildeten Bauteilabschnitte 3 begünstigt.

Anhand der Fig. 3, 5 ist ersichtlich, dass das Schiebeelement 8 während des Einspritzens der plastifizierten Kunststoffmasse in die Werkzeugkavität 6 nicht ausgefahren ist. Die Formfüllung der Werkzeugkavität 6 ist ohne Weiteres möglich, da keine zu geringen und somit in spritzgießtechnischer Hinsicht problematischen Wandstärken realisiert werden müssen. Die Ausbildung des als Filmscharnier dienenden Bauteilabschnitts 4, dessen Wandstärke, wie erwähnt, bei ca. 0,8 mm liegt, ist unproblematisch.

Mit Abschluss der Einspritzphase und Beginn der Nachdruckphase des Spritzgießprozesses wird das Schiebeelement 8 definiert von der in den Fig. 3, 5 gezeigten eingefahrenen Stellung bzw. Ausgangsstellung in die in den Fig. 4, 6 gezeigte ausgefahrene Stellung bzw. Endstellung bewegt.

Durch die Bewegung des Schiebeelements 8 gegen den noch plastischen und somit verformbaren Grundkörper 2 wird plastifiziertes Kunststoffmaterial aus den grundkörperseitigen Bereichen, in welchen die als Sollbruchbereiche dienenden Bauteilabschnitte 3 ausgebildet werden, verdrängt. Dies führt jedoch nicht dazu, dass plastifiziertes Kunststoffmaterial aus der Werkzeugkavität 6 gedrängt wird. Vielmehr kommt es durch die Verdrängung von Kunststoffmaterial aus den Bereichen, in welchen die als Sollbruchbereiche dienenden Bauteilabschnitte 3 ausgebildet werden, zu einer Materialverdichtung in den übrigen Abschnitten des Grundkörpers 2, welche jedoch, wie weiter oben erwähnt, im Hinblick auf die Eigenschaften des fertigen Kunststoffbauteils 1 nicht nachteilig ist.

Fig. 7 zeigt eine Prinzipdarstellung eines Schiebeelements 8 eines im Rahmen eines Verfahrens zur Herstellung eines Kunststoffbauteils 1 gemäß einem Ausführungsbeispiel der Erfindung verwendeten Spritzgießwerkzeugs 7.

Anhand von Fig. 7 lässt sich insbesondere die geometrisch-konstruktive Gestalt eines entsprechenden Schiebeelements 8 erkennen. Ersichtlich weist das Schiebeelement 8 die beschriebene U-Form auf.

Anhand von Fig. 7 lässt sich ferner die Kopplung des Schiebeelements 8 mit einer, z. B. hydraulischen, Antriebseinrichtung 12 erkennen.

## Patentansprüche

1. Verfahren zur Herstellung eines Kunststoffbauteils (1) in Form eines Verkleidungselements zur Verkleidung eines mit wenigstens einem Überrollschutzbügel ausgestatteten Teils einer Fahrzeugkarosserie mittels eines Spritzgießprozesses, welches Kunststoffbauteil (1) einen Grundkörper (2) umfasst, welcher wenigstens einen als Sollbruchbereich ausgebildeten Bauteilabschnitt (3) mit einer im Vergleich zu den übrigen Abschnitten des Grundkörpers (2) geringeren Wandstärke umfasst, umfassend die Schritte:
- Einspritzen einer plastifizierten Kunststoffmasse in eine Werkzeugkavität (6) eines Spritzgießwerkzeugs (7) zur Ausbildung des Grundkörpers (2), wobei die Werkzeugkavität (6) so dimensioniert ist, dass der grundkörperseitige Bereich, in welchem der Bauteilabschnitt (3) auszubilden ist, mit einem Wandstärkenübermaß ausgebildet wird,
- Bewegen wenigstens eines spritzgießwerkzeugseitigen Schiebeelements (8) gegen den grundkörperseitigen Bereich, in welchem der Bauteilabschnitt (3) auszubilden ist, zur Ausbildung des Bauteilabschnitts (3) derart, dass die Wandstärke auf die im Vergleich zu den übrigen Abschnitten des Grundkörpers (8) geringere Wandstärke reduziert wird,
- Abkühlen und Entfernen des Kunststoffbauteils (1) aus der Werkzeugkavität (6), wobei neben dem als Sollbruchbereich ausgebildeten Bauteilabschnitt (3) wenigstens ein als Filmscharnier ausgebildeter weiterer Bauteilabschnitt (4) ausgebildet wird, wobei die Wandstärke des als Filmscharnier ausgebildeten weiteren Bauteilabschnitts (4) zwischen der Wandstärke des als Sollbruchbereich ausgebildeten Bauteilabschnitts (3) und der Wandstärke der übrigen Abschnitte des Grundkörpers (2) liegt, **dadurch gekennzeichnet, dass**
der als Sollbruchbereich ausgebildete Bauteilabschnitt (3) und der als Filmscharnier ausgebildete Bauteilabschnitt (4) gemeinsam einen grundkörperseitigen Klappenbereich (5) begrenzen, wobei der als Sollbruchbereich ausgebildete Bauteilabschnitt (3) mit einer in einem Bereich zwischen 0,1 und 0,4 mm liegenden Wandstärke und die übrigen Abschnitte des Grundkörpers (2), abgesehen von dem wenigstens einen als Filmscharnier ausgebildeten Bauteilabschnitt (4), mit einer in einem Bereich zwischen 1 und 3 mm, insbesondere bei 2,5 mm, liegenden Wandstärke ausgebildet wird und der wenigstens eine als Filmscharnier ausgebildete Bauteilabschnitt (4) mit einer in einem Bereich zwischen 0,6 und 0,9 mm, insbesondere bei 0,8 mm, liegenden Wandstärke ausgebildet wird.

2. Verfahren nach Anspruch 1, **dadurch gekennzeichnet, dass** die verwendete Werkzeugkavität (6) so dimensioniert ist, dass der grundkörperseitige Bereich, in welchem der Bauteilabschnitt (3) auszubilden ist, mit einem Wandstärkenübermaß ausgebildet wird, wobei das Wandstärkenübermaß des grundkörperseitigen Bereichs, in welchem der Bauteilabschnitt (3) auszubilden ist, unterhalb der Wandstärke der übrigen Abschnitte des Grundkörpers (2) liegt.

3. Verfahren nach Anspruch 1 oder 2, **dadurch gekennzeichnet, dass** das Schiebeelement (8) mit Beginn und/oder während der Nachdruckphase des Spritzgießprozesses gegen den Grundkörper (2) bewegt wird.

4. Verfahren nach einem der vorangehenden Ansprüche, **dadurch gekennzeichnet, dass** das gegen den Grundkörper (2) bewegte freie Ende des Schiebeelements (8) mit einer Schrägfläche versehen ist.

5. Verfahren nach einem der vorangehenden Ansprüche, **dadurch gekennzeichnet, dass** der als Sollbruchbereich ausgebildete Bauteilabschnitt (3) U-förmig ausgebildet wird.

6. Verfahren nach einem der vorangehenden Ansprüche, **dadurch gekennzeichnet, dass** als plastifizierte Kunststoffmasse wenigstens ein thermoplastisches Kunststoffmaterial, insbesondere ABS und/oder PC, verwendet wird.

7. Kunststoffbauteil (1), nämlich Verkleidungselement zur Verkleidung eines mit wenigstens einem Überrollschutzbügel ausgestatteten Teils einer Fahrzeugkarosserie, **dadurch gekennzeichnet, dass** es gemäß dem Verfahren nach einem der vorangehenden Ansprüche hergestellt ist.

## Claims

1. A method for producing a plastic component (1) in the form of a covering element for covering a part of a vehicle body that is equipped with a rollover protection bar by means of an injection-moulding process, which plastic component (1) comprises a main body (2) which comprises at least one component portion (3) formed as a predetermined breaking region having a smaller wall thickness compared to the remaining portions of the main body (2), comprising the following steps:
- injecting a plasticised plastic compound into a tool cavity (6) of an injection-moulding tool (7) in order to form the main body (2), wherein the tool cavity (6) is dimensioned such that the region on the main-body side in which the component portion (3) is to be formed is formed so as to have an excess wall thickness;
- moving at least one slider element (8) on the injection-moulding tool side towards the region on the main-body side in which the component portion (3) is to be formed in order to form the component portion (3) in such a way that the wall thickness is reduced to the wall thickness that is smaller compared to the remaining portions of the main body (8);
- cooling and removing the plastic component (1) from the tool cavity (6), wherein besides the component portion (3) which is formed as the predetermined breaking region, at least one further component portion (4) which is formed as an integral hinge is formed, wherein the wall thickness of the further component portion (4) which is formed as an integral hinge is between the wall thickness of the component portion (3) which is formed as the predetermined breaking region and the wall thickness of the remaining portions of the main body (2), **characterised in that** the component portion (3) which is formed as the predetermined breaking region and the component portion (4) which is formed as the integral hinge collectively define a flap region (5) on the main-body side, wherein the component portion (3) which is formed as the predetermined breaking region is formed with a wall thickness in a range of between 0.1 and 0.4 mm and the remaining portions of the main body (2), apart from an optionally present component portion (4) which is formed as an integral hinge, are formed with a wall thickness which is in a range of between 1 and 3 mm, in particular of 2.5 mm, and the or a component portion (4) which is formed as an integral hinge, where present, is formed with a wall thickness in a range of between 0.6 and 0.9 mm, in particular of 0.8 mm.

2. The method according to claim 1, **characterised in that** the tool cavity (6) that is used is dimensioned such that the region on the main-body side in which the component portion (3) is to be formed is formed with an excess wall thickness, wherein the excess wall thickness of the region on the main-body side in which the component portion (3) is to be formed is lower than the wall thickness of the remaining portions of the main body (2).

3. The method according to claim 1 or 2, **characterised in that** the slider element (8) is moved towards the main body (2) at the start of and/or during the holding pressure phase of the injection-moulding process.

4. The method according to one of the preceding claims, **characterised in that** the free end of the slider element (8) which is moved towards the main body (2) is provided with an oblique face.

5. The method according to one of the preceding claims, **characterised in that** the component portion (3) which is formed as the predetermined breaking region is formed in a U-shape.

6. The method according to one of the preceding claims, **characterised in that** at least one thermoplastic material, in particular ABS and/or PC, is used as the plasticised plastic compound.

7. A plastic component (1), namely a covering element for covering a part of a vehicle body that is equipped with a rollover protection bar, **characterised in that** it is produced by the method according to one of the preceding claims.

## Revendications

1. Procédé de fabrication d'un composant en matière synthétique (1) sous forme d'un élément d'habillage pour habiller une partie d'une carrosserie de véhicule doté d'au moins d'une barre anti-renversement au moyen d'un processus de moulage par injection, lequel composant en matière synthétique (1) comprend un corps de base (2) qui comporte au moins une partie du composant (3) conçue comme une section de rupture théorique avec une épaisseur de paroi plus faible par rapport aux autres segments du corps de base (2), comprenant les étapes suivantes :
- injection d'une masse en matière synthétique plastifiée dans une cavité d'outil (6) d'un outil de moulage par injection (7) pour réaliser le corps de base (2), la cavité d'outil (6) étant dimensionnée de telle sorte que la zone côté corps de base, au sein de laquelle la partie du composant (3) doit être réalisée, soit conçue avec une épaisseur de paroi surdimensionnée,
- déplacement d'au moins un élément coulissant (8) côté outil de moulage par injection vers la partie côté corps de base, dans laquelle la partie du composant (3) doit être réalisée, pour réaliser la partie du composant (3) de sorte que l'épaisseur de paroi soit réduite à l'épaisseur de paroi plus faible par rapport aux autres segments du corps de base (8),
- refroidissement et retrait du composant en matière synthétique (1) hors de la cavité d'outil (6), à côté de la partie du composant (3) conçue comme une zone de rupture théorique, au moins une autre partie du composant conçue comme une charnière à film (4) étant conçue, l'épaisseur de paroi de l'autre partie du composant (4) conçue comme une charnière à film, se situe entre l'épaisseur de paroi de la partie du composant (3) conçue comme une section de rupture théorique et l'épaisseur de paroi des autres parties du corps de base (2), **caractérisé en ce que** la partie du composant (3) conçue comme une zone de rupture théorique et la partie du composant (4) conçue comme une charnière à film délimitent ensemble la partie pivotante (5) côté corps de base, cependant la partie du composant (3) conçue comme une section de rupture théorique est réalisée avec une épaisseur de paroi comprise entre 0,1 et 0,4 mm et **en ce que** les autres parties du corps de base (2), hormis une partie du composant (4) éventuellement existant et conçu sous forme d'une charnière à film, sont réalisés avec une épaisseur de paroi se situant entre 1 et 3 mm, plus précisément à 2,5 mm, et **en ce que**, s'il est disponible, la ou une partie du composant (4) conçue comme une charnière à film est réalisée avec une épaisseur de paroi se situant entre 0,6 et 0,9 mm, notamment 0,8 mm.

2. Procédé selon la revendication 1, **caractérisé en ce que** la cavité d'outil (6) utilisée est dimensionnée de telle sorte que la zone côté corps de base, dans laquelle la partie du composant (3) doit être réalisée, est conçue avec une épaisseur de paroi surdimensionnée, l'épaisseur de paroi surdimensionnée de la partie côté corps de base, dans laquelle la partie du composant (3) doit être réalisée, se situe en-dessous de l'épaisseur de paroi des autres parties du corps de base (2).

3. Procédé selon la revendication 1 ou 2, **caractérisé en ce que** l'élément coulissant (8) est déplacé vers le corps de base (2) au début et/ou pendant la phase de maintien en pression du processus de moulage par injection.

4. Procédé selon l'une quelconque des revendications précédentes, **caractérisé en ce que** l'extrémité libre de l'élément coulissant (8) déplacée vers le corps de base (2) est dotée d'une surface inclinée.

5. Procédé selon l'une quelconque des revendications précédentes, **caractérisé en ce que** la partie du composant (3) conçue comme une section de rupture théorique est réalisée en forme de U.

6. Procédé selon l'une quelconque des revendications précédentes, **caractérisé en ce qu'**au moins un matériau synthétique thermoplastique, plus précisément de l'ABS et/ou du PC, est utilisé comme masse synthétique plastifiée.

7. Composant en matière synthétique (1), en effet un élément d'habillage pour habiller une partie d'une carrosserie de véhicule doté d'au moins d'une barre anti-renversement, **caractérisé en ce qu'**il est fabriqué conformément au procédé selon l'une quelconque des revendications précédentes.
